# EUROPEAN PATENT APPLICATION

(11) **EP 3 327 889 A1**
(43) Date of publication of application: **30.05.2018**
(21) Application number: 16827571.7
(22) Date of filing: 27.06.2016
(51) Int. Cl.: H02J 7/00, H01M 2/10, H01M 10/48

(54) **BATTERY PACK**

(30) Priority: 17.07.2015 JP 2015143078
(71) Applicant: Hitachi Koki Co., Ltd., Tokyo 108-6020 (JP)
(72) Inventor: ARADACHI, Takao, Hitachinaka-City Ibaraki 312-8502 (JP)
(74) Representative: Parker, Andrew James
(86) International application number: PCT/JP2016/068987
(87) International publication number: WO 2017/014007

(57) **Abstract**

In order to provide a battery pack that allows information inside the battery pack to be output via communication with an external device without being provided with a dedicated terminal, the battery pack 20 according to the present invention has: a temperature detection element 33 that monitors the temperature of battery 21; a battery type identification element 34 that identifies the type of battery; a first terminal d for transferring information of the temperature detection element to an external device 1; and a second terminal e for transferring information of the battery type identification element to the external device 1. The battery pack 20 is characterized in having blocking means 35 and 36 for blocking the transfer of the information from the temperature detection element and the battery type identification element to another external device 60.

## Description

### BACKGROUND

### Technical Field

The present invention relates to a battery pack for use as a power source of electric tools, accessory devices, and the like.

### Background Art

Battery packs having lithium ion batteries as power sources of cordless electric tools with the advantage of a small size and being lightweight have become widespread in recent years. In addition, battery packs for electric tools are used not only for electric tools but also for a variety of accessory devices including radios, lights, and the like to which the battery packs can be applied, and the range of applications thereof has widened. Regarding diversified usage cases, for example, if a usage history of a battery pack is obtained as information and the information is used in control, better optimized control can be realized. In addition, in a case of a battery pack that is no longer of use and thus has been returned from a customer, analysis of a usage history of the battery or the like may contribute to future development thereof. Patent Literature 1 proposes a battery pack that is controlled based on such history information.

### Citation List

### Patent Literature

Patent Literature 1: Japanese Unexamined Patent Application Publication No. 2014-072945

### SUMMARY OF INVENTION

Battery packs for electric tools are generally compatible with various kinds of electric tool and accessory device able to be used therewith. Although battery packs are connected to charging devices, electric tools, and the like via predetermined connection terminals and then controlled, changing the role of the terminals may impair the above-described compatibility thereof. For example, when a terminal of a conventional battery pack plays a role of transferring temperature information or battery type information, if it is attempted to impose another role different from the aforementioned role, e.g., a role of transmission/reception when extracting history information of the battery back, there is a possibility of conventional control based on temperature information and battery type information no longer being executed. In addition, it may be difficult to provide a new terminal that plays a role of transmission/reception when extracting history information because a problem relating to an installation space for the terminal may arise.

To fulfill the above-described objective, the present invention is characterized in a battery pack having a temperature detection element that monitors a temperature of a battery, a battery type identification element that identifies the type of the battery, a first terminal for transferring information of the temperature detection element to an external device, and a second terminal for transferring information of the battery type identification element to the external device, and blocking means for blocking the transfer of the information from the temperature detection element and the battery type identification element to the external device.

According to the present invention, information of a battery pack can be transmitted to or received from an external device without providing a new dedicated terminal.

### BRIEF DESCRIPTION OF DRAWINGS

Fig. 1 is an example of a circuit diagram illustrating a state in which a battery pack that is the present invention and a charging device that is an external device are connected.
Fig. 2 is an example of a circuit configuration for detecting temperature information in Fig. 1.
Fig. 3 is an example of a circuit configuration for detecting battery type information in Fig. 1.
Fig. 4 is an example of a circuit diagram illustrating a state in which the battery pack that is the present invention and an information transmission/reception device that is an external device are connected.
Fig. 5 is an example of a flowchart of control of the battery pack that is the present invention.

### DESCRIPTION OF EMBODIMENTS

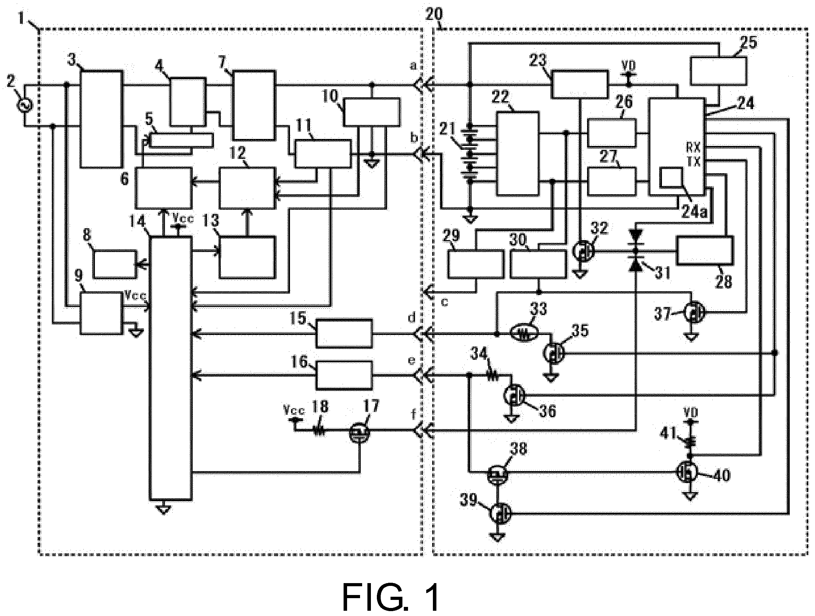

Fig. 1 is a circuit diagram illustrating an embodiment of a state in which a battery pack that is the present invention and a charging device are connected. In Fig. 1, reference numeral 1 represents the charging device that charges the battery pack 20, and a configuration of the charging device will be described below. Note that the charging device 1 is an example of an external device. Reference numeral 2 represents an AC power source serving as a power source of the charging device 1. Reference numeral 3 represents a first rectifying and smoothing circuit for rectifying and smoothing a voltage of the AC power source. Reference numeral 4 represents a high frequency transformer for transforming power supplied from the AC power source 1 to supply power to the battery pack 20. Reference numeral 5 represents a switching circuit constituted by a switching element such as an FET (Field Effect Transistor). Reference numeral 6 represents a switching control circuit which is configured with a switching IC and the like. The switching control circuit 6 controls the switching circuit 5 based on feedback information with respect to a voltage and a current from a secondary side of the high frequency transformer 4, such that a desired voltage or a desired current can be supplied to circuits on the secondary side. Reference numeral 7 represents a second rectifying and smoothing circuit for rectifying and smoothing a voltage transformed by the high frequency transformer 4. Reference numeral 8 represents a display circuit which is constituted by, for example, LEDs (Light Emitting Diodes), and displays current charging states (such as before charging, during charging, charging completed, and the like). Reference numeral 9 represents an auxiliary power supply circuit, which is constituted by a high frequency transformer, a switching circuit, a switching control circuit, and the like, and supplies a voltage Vcc serving as a power source for a control system such as a micro-computer (which will be referred to as a "microcomputer" below) 14 serving as a control unit.

Reference numeral 10 represent a battery voltage detection circuit, and 11 represents a charging current detection circuit respectively for detecting a battery voltage and a charging current of the battery pack 20. Reference numeral 12 represents a voltage/current control circuit constituted by a comparator for comparing set values of a charging voltage and a charging current set by a voltage/current setting circuit 13 with voltage information and current information (detection values) detected by the battery voltage detection circuit 10 and the charging current detection circuit 11, a 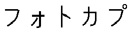 for transmitting comparison information to the switching control circuit 6 on a primary side, and the like. The switching control circuit 6 performs control such that a desired charging voltage and charging current can be supplied to charging circuits on the secondary side (connection terminals a and b) based on feedback information transmitted via the voltage/current control circuit 12.

Reference numeral 14 represents a microcomputer configured to collect various kinds of information by receiving inputs of a battery voltage detected by the battery voltage detection circuit 10, a charging current detected by the charging current detection circuit 11, temperature information of the battery pack 20 detected by a temperature detection circuit 15, and battery type information of the battery pack 20 detected by a battery type detection circuit 16 into an A/D (Analog-Digital) port. In addition, charging voltages and charging voltages can be configured to be a plurality of values set by the voltage/current setting circuit 13 in accordance with signals from an output port of the microcomputer 14. For example, a plurality of charging currents can be set to be 2 A, 3 A, 5 A, 8 A, 10 A, and the like in accordance with settings from the output port. A plurality of charging voltages can as well be set to be 16.8 V (which corresponds to a voltage for charging a 4-cell lithium-ion battery), 21.0 V (which corresponds to a voltage for charging a 5-cell lithium-ion battery), and the like. Note that charging currents and charging voltages are not limited to these set values.

In addition, the microcomputer 14 controls the display circuit 8 in accordance with an output of an output port. For example, when the display circuit 8 is constituted by LEDs, the microcomputer 14 controls color emission of the LEDs by outputting a predetermined signal from the output port thereof in accordance with a charging state. Furthermore, the microcomputer 14 can also control an on-state and an off-state of the switching control circuit 6 by outputting a signal via an insulation element such as the photocoupler. For example, the switching control circuit 6 is configured to be off-state before charging and after completion of charging to stop supply of power to the battery pack 20, and to be on-state during charging to start supply of power to the battery pack 20 in accordance with output signals. Accordingly, power consumption at times other than charging can be reduced.

Reference numeral 17 represents an FET (of a p-channel) serving as a switching element, and reference numeral 18 represents a limiting resistor. An on-state and an off-state of the FET 17 are controlled by the microcomputer 14, and the FET 17 supplies a Vcc voltage to the battery pack 20 via a predetermined connection terminal f.

Reference numeral 20 represents the battery pack, and a configuration thereof will be described below. Reference numeral 21 represents a plurality of battery cells connected in series with each other. In the present embodiment, four battery cells 21 are connected in series having a nominal voltage of 14.4 V. Reference numeral 22 represents a cell voltage detection circuit such as an IC for detecting respective cell voltages of the battery cells 21. Reference numeral 23 represents a power supply circuit that uses the battery cells 21 as a power source, which supplies power to a micro-computer 24 (which will be referred to as a "microcomputer" below) serving as a control unit on the battery pack 20 side. Reference numeral 25 represents a battery voltage detection circuit which detects an overall voltage of the battery cells 21.

Reference numeral 26 represents an overcharging detection circuit. When the cell voltage detection circuit 22 detects that a voltage of any one of the plurality of the battery cells 21 reaches a predetermined voltage or higher (equal to or higher than an overcharging threshold value), the circuit determines overcharging and outputs a predetermined signal (an abnormality signal), and the microcomputer 24 receives the signal via the overcharging detection circuit 26 and then determines an overcharging state. In addition, the signal (the abnormality signal) output from the cell voltage detection circuit 22 at a time of overcharging is transmitted to the charging device 1 side via an overcharging signal output circuit 30 and a predetermined connection terminal d (a first terminal) to be connected to when the battery pack 20 is connected to the charging device 1. The charging device 1 is designed to stop charging based on this signal.

Reference numeral 27 represents an overdischarging detection circuit. When the cell voltage detection circuit 22 detects that a voltage of any one of the plurality of battery cells 21 reaches a predetermined voltage or lower (lower than or equal to an overdischarging threshold value), the circuit determines overdischarging and outputs a predetermined signal (an abnormality signal), and then the microcomputer 24 receives the signal via the overdischarging detection circuit 27 and determines an overdischarging state. In addition, the signal (the abnormality signal) output from the cell voltage detection circuit 22 at a time of overdischarging is transmitted to an electronic device side such as an electric tool, which is not illustrated, via an overdischarging signal output circuit 29 and a predetermined connection terminal c (a fourth terminal) through which the electronic device is connected to the battery pack 20. The electronic device is configured to stop discharging based on the signal. In addition, the microcomputer 24 causes a storage unit 24a such as an internal memory to store the number of reception operations based on such an abnormality signal received via the overcharging detection circuit 26 or the overdischarging detection circuit 27.

Reference numeral 31 represents a diode, and 32 represents an FET serving as a switching element. When the battery pack 20 is connected to the charging device 1, the voltage Vcc is supplied to a gate of the FET 32 of the battery pack 20 via the FET 17 of the charging device 1, a predetermined connection terminal f of the both elements, and the diode 31 of the battery pack 20, and thus the FET 32 is turned on. In the present embodiment, the power supply circuit 23 operates when the FET 32 is turned on, and thus power is supplied to the microcomputer 24. In addition, the diode 31 is also connected to an output port of the microcomputer 24, and after the microcomputer 24 is activated, a predetermined signal is output from the output port, and thus the FET 32 maintains an on-state. In other words, once the microcomputer 24 is activated, an operation state of the power supply circuit 23 can be maintained by an output signal from the output port of the microcomputer 24 even if the voltage Vcc is not supplied from the charging device 1 side, and an operation state of the microcomputer 24 can be maintained. In addition, the voltage Vcc supplied to the battery pack 20 when being connected to the charging device 1 is configured to be detectable by the microcomputer 24 via the connection detection circuit 28 serving as a signal detection means. The microcomputer 24 is configured to store the number of times of connection of the battery pack 20 to the charging device 1 into an internal memory 24a thereof.

Reference numeral 33 represents a thermistor serving as a temperature detection element provided in proximity to the battery cells 21. Temperature information of the thermistor 33 is detected by the temperature detection circuit 15 of the charging device 1 via the predetermined connection terminal d, and thus charging control is performed on the basis of a detected temperature detection value. Reference numeral 34 represents a battery type identification resistor (battery type identification element), and is provided to identify, for example, a battery pack constituted by four battery cells (in serial connection), a battery pack constituted by five battery cells (in serial connection), and the like. In other words, the battery type identification resistor 34 has information of the battery pack 20 (the number of series connections of battery cells, the number of parallel connections of battery cells, and the like) having a different resistance value for each battery pack. Information of the battery identification resistor is detected by the battery type detection circuit 16 of the charging device 1 via a predetermined connection terminal e (a second terminal), and thus charging control is performed on the basis of the detected information of the battery type identification resistor.

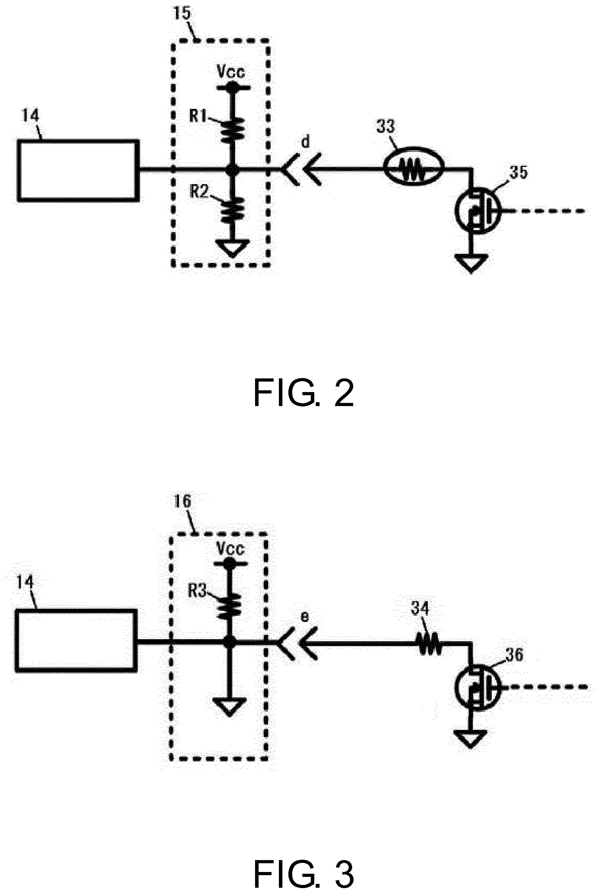

Reference numerals 35 and 36 represent FETs serving as switching elements, functioning as blocking means as will be described below. On-state and off-state of the FETs 35 and 36 are controlled using predetermined output ports of the microcomputer 24. When the FETs 35 and 36 are in the on-state, there is a state in which the charging device 1 can detect temperature information and battery type identification information. Here, methods for detecting temperature information and battery type identification information will be described using Figs. 2 and 3.

Fig. 2 is an example of the method for detecting temperature information. The temperature detection circuit 15 of the charging device 1 is configured to divide the voltage Vcc into resistors R1 and R2. One terminal of the thermistor 33 of the battery pack 20 is connected to a connection point of the resistors R1 and R2 via the predetermined connection terminal d. When the FET 35 is in the on-state at that time, the other terminal of the thermistor 33 is at a ground level, the microcomputer 14 of the charging device 1 receiving a value of the voltage Vcc divided by a combined resistance of the resistors R1 and R2 and the thermistor as an input. The microcomputer 14 identifies temperature information based on this voltage division value. On the other hand, when the FET 35 is in the off-state, the other terminal of the thermistor 33 is not at the ground level (an open state) and it is difficult for the microcomputer 14 to detect temperature information. In other words, the microcomputer 14 of the charging device 1 is not connected to the thermistor 33.

Fig. 3 is an example of the method for detecting battery type identification information. The battery type identification circuit 16 of the charging device 1 has a resistor R3 pulled up to the voltage Vcc. One terminal of the battery type identification resistor 34 of the battery pack 20 is connected to the resistor R3 via the predetermined connection terminal e. When the FET 36 is in the on-state at that time, the other terminal of the battery type identification resistor 34 is at the ground level, and thus the microcomputer 14 of the charging device 1 receives a value of the voltage Vcc divided by the resistor R3 and the battery type identification resistor 34 as an input. The microcomputer 14 identifies battery type information based on this voltage division value. On the other hand, when the FET 36 is in the off-state, the other terminal of the battery type identification resistor 34 is not at the ground level (an open state), and thus it is difficult for the microcomputer 14 to detect battery type identification information. In other words, the microcomputer 14 of the charging device 1 is not connected to the battery type identification resistor 34.

Reference numeral 37 represents an FET serving as a switching element provided for transmitting digital information as will be described below. A gate of FET 37 is connected to an output port of the microcomputer 24 so that the microcomputer can control an on-state and off-state of the FET 37. When the battery pack 20 is connected to the charging device 1, the microcomputer 24 controls the FET 37 such that the FET is in the off-state.

Reference numerals 38, 39, and 40 are a P-channel FET, an N-channel FET, and an N-channel FET serving as switching elements respectively. Reference numeral 41 represents a resistor. These elements are provided for reception of digital information as will be described below. A gate of the FET 39 is connected to an output port of the microcomputer 24 so that the microcomputer can control an on-state and off-state of the FET 39. When being connected to the charging device 1, the microcomputer 24 controls the FET 39 such that the FET is in the off-state.

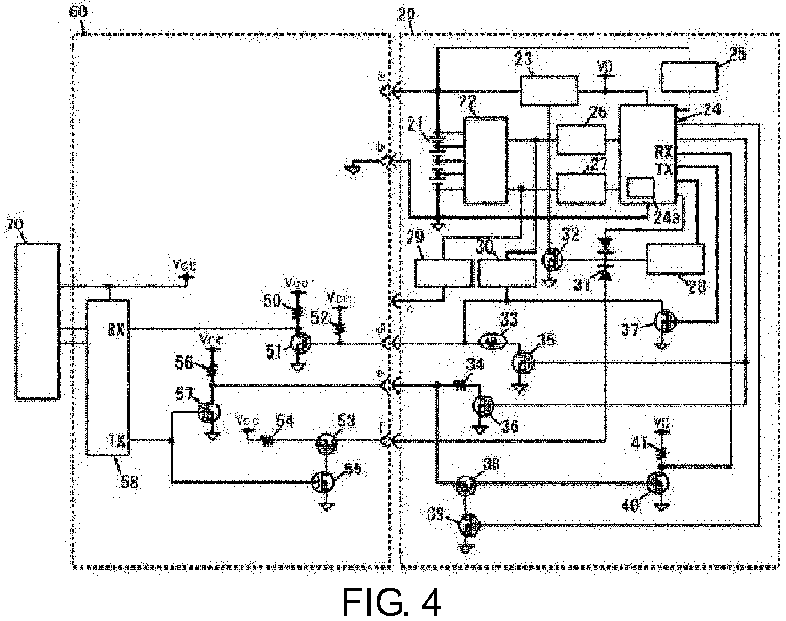

Fig. 4 is an example of a circuit diagram illustrating a state in which the battery pack that is the present invention and an information transmission/reception device (another external device) are connected. An example in which battery information stored in a storage unit 20a such as a memory included in the battery pack 20 is transmitted to and received from the external device through digital communication without providing a new connection terminal will be described with reference to Fig. 4.

Description of the battery pack 20 will be omitted due to the battery pack having the same configuration as that in Fig. 1. Reference numeral 60 represents the information transmission/reception device which is the external device for transmitting and receiving information stored in the storage unit 24a such as the memory included in the battery pack 20, and a configuration thereof will be described below. Description is as follows. Reference numerals 50, 52, 54, and 56 represent resistors (limiting resistors), 51, 53, 55, and 57 represent FETs serving as switching elements, and 58 represents a communication IC. In addition, the information transmission/reception device 60 is configured to be capable of performing transmission and reception with respect to a personal computer (PC) 70 and thus can be operated by the PC 70.

A communication operation of battery information will be described. An operation of the battery pack 20 when the battery pack is connected to the information transmission/reception device 60 will be described below. After the battery pack 20 is connected to the information transmission/reception device 60 via the connection terminals a to f, a user causes corresponding software of the PC 70 to operate, and then the communication IC 58 operates. First, the communication IC 58 outputs a predetermined digital signal from a TX terminal. This digital signal is basically a signal output with a high or a low level forming a pulse (a pulse signal). The TX terminal is connected to a gate of the FET 55 and turns on the FET when the pulse signal is at a high level. When the FET 55 is turned on, the P-channel FET 53 is turned on as well. When the FET 53 is turned on, the voltage Vcc is applied to the gate of the FET 32 of the battery pack 20 via a limiting resistor 54 and the predetermined connection terminal f (a third terminal). Thereby the microcomputer 24 of the battery pack 20 is activated as described above. Note that, once the microcomputer 24 is activated, a signal is output from the output port thereof connected to the diode 31 and the microcomputer can continuously operate regardless of an on- or off-state of the FET 32 as described above.

In addition, the connection detection circuit 28 can detect a signal of the voltage Vcc. In the present embodiment, when the connection detection circuit 28 detects a predetermined pulse signal, the battery pack 20 recognizes a connection to the information transmission/reception device 60, rather than to the charging device 1 illustrated in Fig. 1. When the connection to the information transmission/reception device 60 is recognized, the microcomputer 24 turns the FETs 35 and 36 off so that digital communication is performed between the battery pack 20 and the information transmission/reception device 60. Due to turning off the FETs 35 and 36, the thermistor 33 and the battery type identification resistor 34 are not electrically connected as described above. Then, the microcomputer 24 outputs a predetermined output signal from the output port connected to the gate of the FET 39 to turn on the FET 39. When the FET 39 is turned on, the P-channel FET 38 is turned on as well.

When a digital signal is output from the TX terminal of the communication IC 58 of the information transmission/reception device 60 in that state, the digital signal controls an on- and off-state of the FET 57. The FET 57 enters the on-state when the signal with a high level is output from the TX terminal, and a drain of the FET 57 is at a ground potential. This ground potential is transmitted to the battery pack 20 via the predetermined connection terminal e. The FETs 38 and 40 also enter the off-state when the drain of the FET 57 is at the ground potential, and thus a voltage VD is input to an RX terminal of the microcomputer 24 of the battery pack 20 via the resistor 41.

On the other hand, when a signal with a low level is output from the TX terminal, the FET 57 enters the off-state and the voltage Vcc is transmitted to the battery pack 20 via the resistor 56 and the predetermined connection terminal e. Furthermore, the FET 38 and the FET 40 enter the on-state due to the voltage Vcc in the battery pack 20. Thus, a voltage with a ground level is input to the RX terminal of the microcomputer 24 of the battery pack 20.

In short, the RX terminal of the microcomputer 24 of the battery pack 20 receives a signal with a high level when a signal with a high level is output from the TX terminal of the communication IC 58 of the information transmission/reception device 60, and conversely, the RX terminal of the microcomputer 24 receives a signal with a low level when a signal with a low level is output from the TX terminal of the communication IC 58. Furthermore, transmission of these signals is performed using the terminal e, which is designed to be used for transmitting the battery type identification information in the case in which the battery pack is connected to the charging device 1 described in Fig. 1, rather than a terminal dedicated to digital signal transmission. Thus, a new terminal dedicated to digital signal transmission is unnecessary, accordingly there is no need to secure a terminal installation space and thus an increase in a size can be prevented, and compatibility can be maintained.

When a digital signal is output from a TX terminal of the microcomputer 24 of the battery pack 20, the digital signal controls the on-state or the off-state of the FET 37. When a signal with a high level is output from the TX terminal, the FET 37 enters the on-state and a drain of the FET 37 is at a ground potential. This ground potential is transmitted to the information transmission/reception device 60 via the predetermined connection terminal d. Since the FET 51 is in the off-state at the ground potential, the voltage Vcc is input to the RX terminal of the communication IC 58 of the information transmission/reception device 60 via the resistor 50.

On the other hand, when a signal with a low level is output from the TX terminal of the microcomputer 24, the FET 37 enters the off-state and no potential is transmitted to the information transmission/reception device 60 via the predetermined connection terminal d. Furthermore, the voltage Vcc is applied to a gate of the FET 51 via the resistor 52 in the information transmission/reception device 60, and the FET 51 is switched to the on-state. Thus, a voltage with a ground level is input to the RX terminal of the communication IC 58 of the information transmission/reception device 60.

That is, when a signal with a high level is output from the TX terminal of the microcomputer 24 of the battery pack 20, the RX terminal of the communication IC 58 of the information transmission/reception device 60 receives the signal with the high level, and conversely, when a signal with a low level is output from the TX terminal of the microcomputer 24, the RX terminal of the communication IC 58 receives the signal with the low level. Furthermore, transmission of these signals is performed using the terminal d, which is designed to be used for transmitting temperature information in the case in which the battery pack is connected to the charging device 1 described in Fig. 1, rather than a terminal dedicated to digital signal transmission. Thus, a new terminal dedicated to digital signal transmission is unnecessary.

As described above, according to the present embodiment, battery information stored in the storage unit such as the memory provided inside the battery pack can be transmitted to the external device using terminals, which are designed to be used for transmitting temperature information and battery type identification information in the case in which the battery pack is connected to the charging device. That is, a plurality of pieces of information can be transmitted using predetermined terminals (existing terminals). Thus, there is no need to secure an installation space for a new terminal and thus an increase in a size can be prevented, and compatibility can be maintained with the existing charging function.

In addition, in the present embodiment, the information transmission/reception device 60 is also connected to the PC 70 and information obtained through digital communication can also be displayed on the PC 70. Furthermore, the information transmission/reception device 60 is not limited to a device that causes battery information to be displayed on the PC 70, and may be, for example, a charging device that performs charging control based on battery information obtained through digital communication or an electric tool or an accessory device that performs discharging control based on battery information obtained through digital communication.

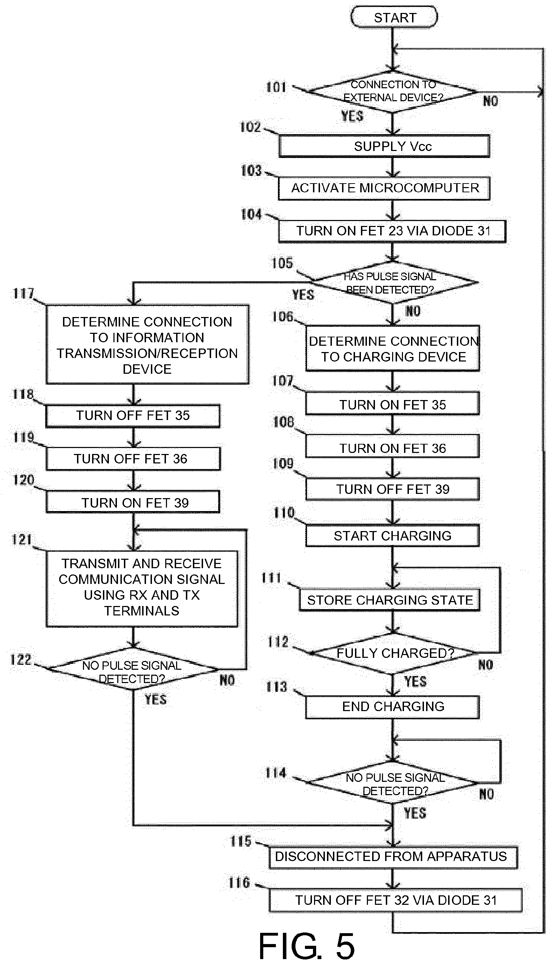

Next, a communication operation performed between the battery pack 20 and external devices will be described using a control flowchart of Fig. 5. First, the battery pack 20 determines whether it is connected to an external device (Step 101). When the battery pack is connected to an external device, a voltage Vcc is supplied via the predetermined connection terminal f (Step 102), and the FET 32 included in the battery pack 20 is turned on due to the voltage Vcc. Accordingly, the power supply circuit 23 operates and the microcomputer 24 of the battery pack 20 is activated (Step 103). The microcomputer 24 activated in Step 103 outputs a predetermined output signal from the output port to turn on the FET 32 via the diode 31 (Step 104).

Then, the connection detection circuit 28 determines whether a predetermined pulse signal has been detected (Step 105). When the predetermined pulse signal has been detected in Step 105, it is determined that the battery pack is connected to the information transmission/reception device 60 (Step 117). When no predetermined pulse signal has been detected in Step 105, it is determined that the battery pack is connected to the charging device 1 (Step 106).

When it is determined that the battery pack is connected to the charging device 1 in Step 106, the microcomputer 24 outputs a predetermined signal from an output port thereof to turn on the FETs 35 and 36 to set the thermistor 33 and the battery type identification resistor 34 to be in an active state (Steps 107 and 108). Since no digital communication is performed when the battery pack is connected to the charging device 1, the microcomputer 24 outputs a predetermined signal from the output port to turn off the FET 39 (Step 109).

The charging device 1 sets a charging voltage and a charging current using the voltage/current setting circuit 13 based on information of the thermistor 33 and the battery type identification resistor 34 transmitted via the predetermined connection terminals d and e, and starts charging (Step 110). After charging is started, for example, information of a charging state such as detection information of the overcharging detection circuit 26 or detection information of the connection detection circuit 28 (the number of times of connection to the charging device) is stored in the memory 24a of the microcomputer 24 (Step 111). Then, the charging device 1 determines whether the battery pack has been fully charged (Step 112). For example, in a constant current/constant voltage charging method that is a general charging method for charging lithium-ion battery cells, if a charging current reaches a predetermined value or lower in a constant voltage section, a fully charged state is determined, and the charging ends (Step 113). Note that a full charge determination method is not limited thereto.

Then, the connection detection circuit 28 determines whether there is a state in which no pulse signal can be detected (Step 114). The state of Step 114 in which no signal can be detected means that there is no supply of the voltage Vcc from the external device side, and the battery pack 20 is not connected to the external device (a non-connection state) (Step 115). The microcomputer 24 stops the operation when it is disconnected from the external device, and thus the microcomputer 24 outputs a predetermined signal from the output port to turn off the FET 32 via the diode D31 (Step 116), and the process returns to Step 101.

On the other hand, when it is determined that the battery pack is connected to the information transmission/reception device 60 in Step 117, the microcomputer 24 outputs a predetermined signal from the output port to switch the thermistor 33 and the battery type identification resistor 34 to an electrically open state and turn off the FETs 35 and 36 (Steps 118 and 119). In addition, the microcomputer 24 outputs a predetermined signal from the output port to help the battery pack 20 and the information transmission/reception device 60 to perform digital communication and to turn on the FET 39 (Step 120). After this state, the microcomputer 24 of the battery pack 20 and the communication IC 58 of the information transmission/reception layer device 60 perform communication of information using the RX terminals and the TX terminals of both sides via the predetermined connection terminals (Step 121). Then, the connection detection circuit 28 determines whether a signal can be detected (Step 122) as in Step 114, and when there is a non-detection state in which no signal is detected, the battery pack 20 is determined to be disconnected from the information transmission/reception device 60 (Step 115), and the microcomputer 24 stops the operation when it is disconnected from the external device, and thus the microcomputer 24 outputs a predetermined signal from the output port to turn off the FET 32 via the diode D31 (Step 116), and the process returns to Step 101.

As described above, the battery pack 20 that is the present invention can transmit information of the thermistor and battery type identification information via the predetermined connection terminals d and e when the battery pack is connected to the charging device 1. Meanwhile, when the battery pack is connected to the information transmission/reception device 60, the battery pack performs communication of battery information therewith via the connection terminals d and e which are designed to be used in the case in which the battery pack is connected to the charging device 1. Since it is not necessary to provide a new communication dedicated terminal as described above, there is no need to secure an installation 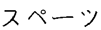 for a new connection terminal, thus an increase in a size can be prevented, transmission and reception of digital information can be performed via the existing connection terminals, and therefore compatibility can be maintained.

Note that, in the present embodiment, the blocking means (the FETs 35 and 36) are configured to perform blocking when the battery pack 20 is connected to the information transmission/reception device 60. However, when the charging device 1 has a function of the information transmission/reception device 60 (a history managing function), if the charging device 1 is configured to output a pulse signal at a predetermined timing, for example, before charging is started or after charging is completed, the charging device 1 alone can perform charging and history management of the battery pack 20 without separately providing the information transmission/reception device 60. In addition, if an electric tool or an accessory device is configured to output a pulse signal when the battery pack 20 is discharged, i.e., the battery pack is connected to the electric tool, the accessory device, or the like, a history of the discharge state can be managed as well. In this case, there is no need to provide a new terminal as long as the connection terminal c can be used as an output terminal of the pulse signal.

### [Reference Signs List]

1 is Charging device (external device). 2 is AC power source. 3 is First rectifying and smoothing circuit. 4 is High frequency transformer. 5 is Switching circuit. 6 is Switching control circuit. 7 is Second rectifying and smoothing circuit. 8 is Display circuit. 9 is Auxiliary power supply circuit. 10 is Battery voltage detection circuit. 11 is Charging current detection circuit. 12 is Voltage/current control circuit. 13 is Voltage/current setting circuit. 14 is Microcomputer. 15 is Temperature detection circuit. 16 is Battery type detection circuit. 17 is FET (switching element). 18 is Resistor. 20 is Battery pack. 21 are Battery cells. 22 is Cell voltage detection circuit. 23 is Power supply circuit. 24 is Microcomputer. 25 is Battery voltage detection circuit. 26 is overcharging detection circuit. 27 is overdischarging detection circuit. 28 is Connection detection circuit. 29 is overdischarging signal output circuit. 30 overcharging signal detection circuit. 31 is Diode. 32 is FET (switching element). 33 is Thermistor (temperature detection element). 34 is Battery type identification resistor. 36 to 40 are FETs (switching elements). 41 is Resistor. 60 Information transmission/reception device (external device).

## Claims

1. A battery pack which is **characterized in that** comprising:
a temperature detection element that monitors a temperature of a battery;
a battery type identification element that identifies the type of the battery;
a first terminal for transmitting information of the temperature detection element to an external device;
a second terminal for transmitting information of the battery type identification element to the external device; and
a blocking means that blocks transmission of information from the temperature detection element and/or the battery type identification element to the external device.

2. The battery pack according to claim 1, comprising:
a control unit that is activated by a predetermined signal from the external device; and
a signal detection means for detecting the predetermined signal,
wherein, when the signal detection means detects the predetermined signal, the blocking means blocks transmission of information from the temperature detection element and the battery type identification element to the external device, and
the control unit is configured to cause a digital signal to be transmitted to or received from the external device via the first terminal and/or the second terminal.

3. The battery pack according to claim 2, wherein the predetermined signal detected by the signal detection means is a pulse signal.

4. The battery pack according to claim 2 or 3, wherein a usage history of the battery pack is configured to be communicated to the external device using a digital signal.

5. The battery pack according to any one of claims 1 to 4, wherein, when the external device is a charging device for charging the battery pack, the information of the temperature detection element and the information of the battery type identification element are transmitted to the charging device via the first terminal and the second terminal, and when the external device is a device other than the charging device, transmission of the information is blocked by the blocking means.
